# EUROPÄISCHE PATENTSCHRIFT

(11) **EP 0 551 600 B1**
(45) Veröffentlichungstag und Bekanntmachung des Hinweises auf die Patenterteilung: **25.10.1995**
(21) Anmeldenummer: 92120361.8
(22) Anmeldetag: 28.11.1992
(51) Int. Cl.: H05K 5/00, H02G 3/04

(54) **Versorgungseinheit**
Power unit
Unité d'alimentation

(30) Priorität: 14.01.1992 DE 4200691
(43) Veröffentlichungstag der Anmeldung: 21.07.1993
(73) Patentinhaber: TRILUX-LENZE GmbH & Co. KG, D-59759 Arnsberg (DE)
(72) Erfinder: Lehrich, Karl, W-5760 Arnsberg 1 (DE); Draken, Hans-Dieter, W-5760 Arnsberg 1 (DE); Schmidt, Helmut, W-5760 Arnsberg 1 (DE); Thiele, Karl-Heinz, W-5760 Arnsberg 1 (DE)
(74) Vertreter: Selting, Günther, Dipl.-Ing.

(56) Entgegenhaltungen:
- EP-A- 0 392 956
- EP-A- 0 440 972
- FR-A- 2 219 549
- FR-A- 2 448 240
- FR-A- 2 473 226

## Beschreibung

Die Erfindung betrifft eine Versorgungseinheit für die medizinische Versorgung von Patienten, insbesondere auf Intensivstationen.

Aus DE-PS 23 09 848 ist eine medizinsiche Versorgungseinheit bekannt, die aus zwei einander gleichen Kanalgehäusen besteht, welche horizontal an einer Wand angebracht werden und mit ihren horizontalen Stoßwänden aneinanderliegen. Jedes der Kanalgehäuse besteht aus einem im wesentlichen U-förmigen Profil, dessen Basis der Raumwand zugewandt ist. Die gegeneinanderliegenden Stoßwände der beiden Profile bilden eine Trennwand. Die längslaufenden Öffnungen der Kanalgehäuse sind mit Abdeckplatten verschlossen, die Buchsen, Steckdosen oder andere Entnahmestellen tragen. Die Abdeckplatten haben nach hinten abstehende Stege, die in entsprechende Nuten der horizontalen Wände der Kanalgehäuse eingreifen. Die beiden Kanalgehäuse werden einzeln an einem wandseitig montierten Halter verschraubt und somit in fester gegenseitiger Zuordnung an der Wand befestigt.

Die zuvor erwähnte Versorgungseinheit wurde in der Praxis dahingehend weiterentwickelt, daß an der Ober- und der Unterwand der Gehäuseeinheit vorstehende Tragschienen angebracht wurden. An diesen Tragschienen können Geräte wie Monitore, Infusionspumpen u.dgl. befestigt werden.

Wenn die Versorgungseinheit mit Tragschienen versehen ist, die hochbelastet werden, besteht die Gefahr, daß die horizontalen Wände der Kanalgehäuse sich durchbiegen. Dabei ist zu berücksichtigen, daß eine Versorgungseinheit sich oftmals über eine Länge von mehreren Metern erstreckt und daß über diese Länge erhebliche Biegemomente auftreten können. Während die Kanalgehäuse aus durchgehenden Profilen bestehen, erstrecken sich die Abdeckplatten jeweils nur über einen Teilbereich der gesamten Länge. Insbesondere wenn Abdeckplatten demontiert worden sind, kann sich die gesamte Gehäuseeinheit durch die Gewichtsbelastung derart verformen, daß die zur Stabilisierung beitragenden Abdeckplatten nicht mehr montiert oder geschlossen werden können. Ein weiterer Nachteil der bekannten Versorgungseinheit besteht darin, daß die aus zwei Kanalgehäusen bestehende Gehäuseeinheit nicht insgesamt handhabbar und an einem Wandhalter montierbar ist. Vielmehr muß jedes Kanalgehäuse einzeln montiert werden, wobei es vorkommen kann, daß beide Kanalgehäuse gegeneinander verschoben oder versetzt sind und nicht voll gegeneinanderstoßen.

Aus EP-A-0 940 972, von der des Oberbegriff des Patentanspruchs 1 ausgeht, ist eine Kabelkanaleinheit bekannt, die zwei parallele Kanäle aufweist, welche durch Abdeckplatten verschlossen werden können. Jede Abdeckplatte bildet an einem Rand einen Gelenkeingriff mit der angrenzenden Kanalwand und am anderen Rand einen Rasteingriff mit der gegenüberliegenden Kanalwand. Der Rasteingriff dient zum rastenden Festlegen der Abdeckplatte in der Schließstellung. Er erfordert einen Rastnocken, der an einem federnden Arm der Abdeckplatte vorgesehen ist. Die Abdeckplatte ist nicht imstande, wesentliche Verformungsbelastungen der Gehäuseeinheit aufzunehmen. Beim Einwirken einer größeren Belastung auf die Gehäuseeinheit wird die Schließfunktion der Abdeckplatten behindert. Tragschienen sind bei dieser bekannten Kanaleinheit überhaupt nicht vorgesehen.

Der Erfindung liegt die Aufgabe zugrunde, eine Versorgungseinheit mit zwei durch eine Trennwand voneinander getrennten durchgehenden Kanälen zu schaffen, die auch bei hohen Gewichtsbeanspruchungen der Tragschienen sicher und in definierter Weise mit den Abdeckplatten verschlossen werden kann.

Die Lösung dieser Aufgabe erfolgt erfindungsgemäß mit den im Patentanspruch 1 angegebenen Merkmalen.

Bei der erfindungsgemäßen Versorgungseinheit befindet sich jede Abdeckplatte an ihrem einen Rand in einem Gelenkeingriff mit der zugehörigen horizontalen Wand der Gehäuseeinheit, während sie sich an dem gegenüberliegenden Rand in einem Zentriereingriff mit einer Wand der Gehäuseeinheit befindet. Dies hat zur Folge, daß die Abdeckplatte um den Gelenkeingriff herum verschwenkt werden kann und bei Erreichen ihrer Schließstellung automatisch in Zentriereingriff mit einer anderen Wand der Gehäuseeinheit gelangt. Sollten infolge einer Belastung Verformungen aufgetreten sein, so wird die Abdeckplatte durch die zusammenwirkenden schrägen Zentrierflächen des Zentriereingriffs automatisch durch das Keilnest in die richtige Position gezogen, in der sie die Öffnung des betreffenden Kanals passend verschließt. Die Abdeckplatte vervollständigt die Umfangswand des Kanals und verleiht somit dem Kanal eine große Festigkeit und Steifigkeit. Wenn die Abdeckplatte offen ist, können dagegen Verformungen eintreten. Diese Verformungen werden beim Schließen der Abdeckplatte automatisch rückgängig gemacht. Die Abdeckplatte kann somit selbst unter Last und bei verformten Kanalgehäuse sicher verschlossen werden, wobei die reguläre Form des Kanalgehäuses wieder hergestellt wird.

Der Gelenkeingriff ermöglicht es, die Abdeckplatte nach Lösen des Zentriereingriffs zu verschwenken. Zweckmäßigerweise ist der Gelenkeingriff so ausgebildet, daß er nach Verschwenken der Abdeckplatte um einen vorgegebenen Mindestwinkel das Abziehen der Abdeckplatte von der der Gehäuseeinheit ermöglicht.

Die Erfindung befaßt sich ferner mit dem Problem einer einfachen und präzisen Montage des Kanalgehäuses an einer Wandbefestigung. Zur Lösung dieses Problems dienen die Merkmale des Patentsanpruchs 6. Dadurch daß die aneinanderliegenden Stoßwände mit Verhakungselementen ineinander greifen können diese Stoßwände nicht gegeneinander verschoben werden. Gegen gegenseitiges Auseinanderspreizen sind sie durch eine Klammer gesichert. Damit entsteht eine aus zwei selbständigen Kanalgehäusen bestehende Gehäuseeinheit, deren Kanalgehäuse durch die Klammer zusammengehalten und gegen gegenseitige Verschiebungen gesichert. Die Gehäuseeinheit kann insgesamt fabrikmäßig vorgefertigt und als Einheit an der Wandbefestigung angebracht werden ohne daß die Kanalgehäuse sich gegeneinander verschieben könnten.

Vorteilhafte Ausgestaltungen und Weiterbildungen der Erfindung sind den Unteransprüchen zu entnehmen.

Im folgenden wird unter Bezugnahme auf die Zeichnungen ein Ausführungsbeispiel der Erfindung näher erläuter.

Es zeigen:
- Fig. 1: eine perspektivische Darstellung der Versorgungseinheit,
- Fig. 2: einen Querschnitt der Versorgungseinheit und
- Fig. 3: eine Ansicht der die beiden Kanalgehäuse zusammenhaltenden Klammer.

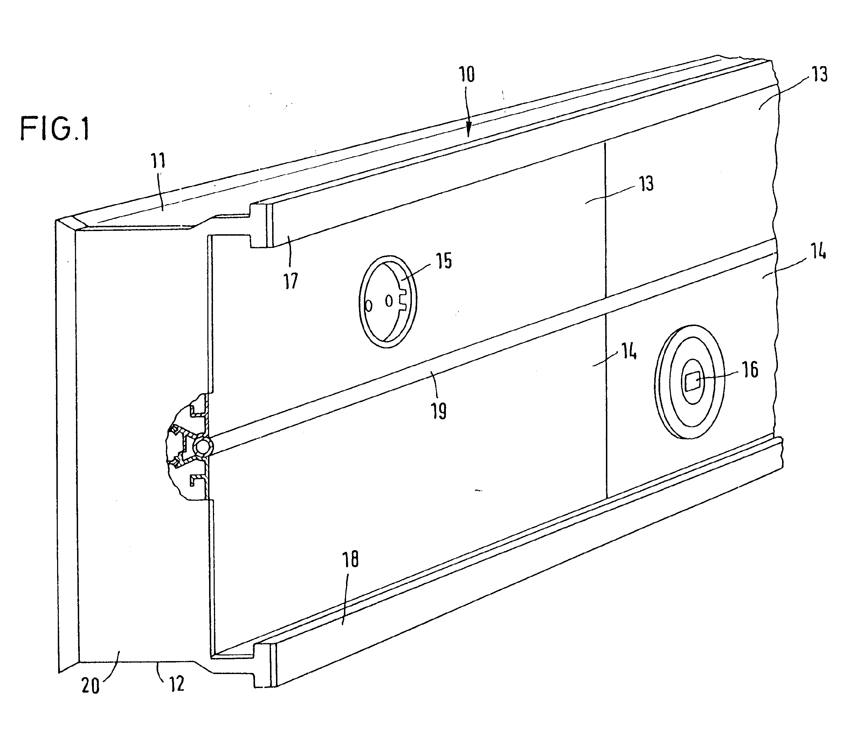

Gemäß Fig. 1 besteht die Versorgungseinheit aus einer langgestreckten Gehäuseeinheit 10, die an einer Wand befestigt werden kann und die zwei übereinander angeordnete, unmittelbar gegeneinanderstoßenden Kanalgehäuse 11,12 aufweist. Jedes Kanalgehäuse hat im wesentlichen U-förmigen Querschnitt mit nach vorne (von der Wand fort) gerichteter Öffnung. Diese Öffnung ist durch eine Abdeckplatte 13 bzw. 14 verschlossen, wobei die Abdeckplatten 13,14 in der Regel eine geringere Länge haben als die Kanalgehäuse. Die Abdeckplatten 13 und 14 enthalten Anschlußeinrichtungen 15,16 für die Stromversorgung, elektrische Signalverbindungen, Meßleitungen oder Druckluft, Vakuum, Gas u.dgl.. Die Kanäle der beiden Kanalgehäuse 11 und 12 sind voneinander getrennt. Der Kanal des Kanalgehäuses 11 enthält elektrische Leitungen, während derjenige des Kanalgehäuses 12 Gasleitungen bzw. Vakuumleitungen enthält. Die gegenseitige Trennung solcher Leitungen ist erforderlich, damit nicht innerhalb eines Gaskanals durch elektrische Defekte Explosionen entstehen können.

Von der Oberwand und von der Unterwand des Kanalgehäuses 10 stehen Tragschienen 17 bwz. 18 nach vorne ab. Diese Tragschienen, die T-Profil haben, dienen zum Anhängen und Fixieren von Geräten die für die medizinische Patientenversorgung benötigt werden. Solche Geräte können ein erhebliches Gewicht haben und Verformungen der Gehäuseeinheit hervorrufen. Der Spalt zwischen den oberen Abdeckplatten 13 und den unteren Abdeckplatten 14 ist durch einen flexiblen Dichtungsschlauch 19 verschlossen, der von vorneher in diesen Spalt eingedrückt werden kann und dort einrastet. Die stirnseitigen Enden der Gehäuseeinheit 10 können durch Endwände 20 verschlossen werden.

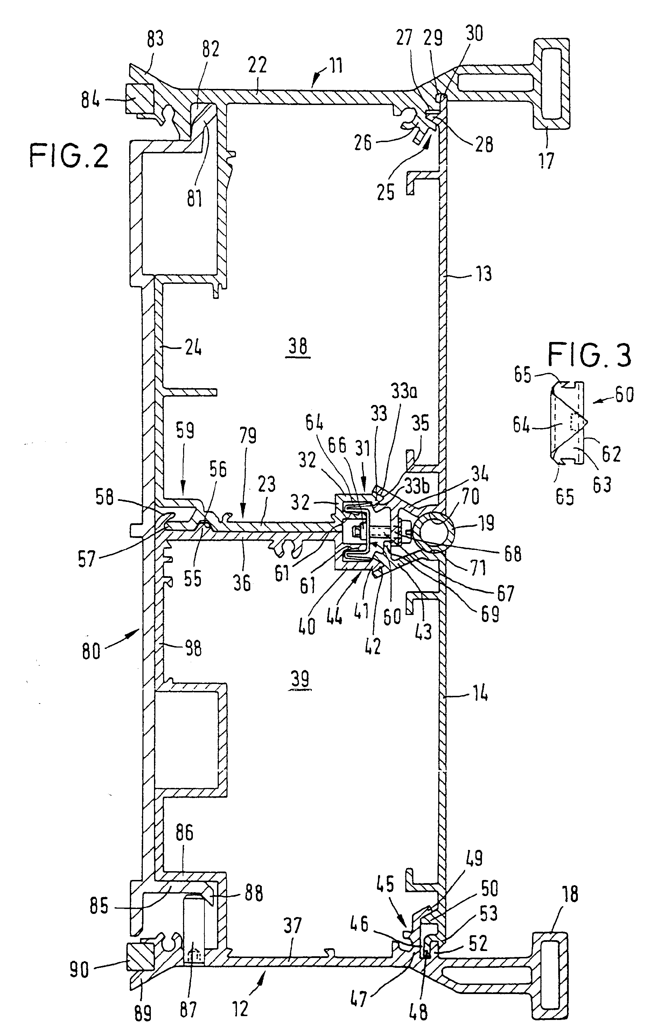

Fig. 2 zeigt die beiden Kanalgehäuse 11,12, die übereinander gesetzt und miteinander verbunden sind und von denen jedes durch eine Abdeckplatte 13 bzw. 14 verschlossen ist.

Das obere Kanalgehäuse 11 weist eine horizontale Oberwand 22 und eine hierzu parallele Unterwand 23 auf, die durch eine Rückwand 24 miteinander verbunden sind. Von der Oberwand 22 steht die T-förmige Tragschiene 17 nach vorne ab.

An dem vorderen Ende der Oberwand 22 ist die Abdeckplatte 13 mit einem Gelenkeingriff 25 schwenkbar gelagert. Der Gelenkeingriff 25 weist in einem von der Oberwand 22 nach unten abstehenden Vorsprung 26 eine im wesentlichen rechtwinklig zur Ebene der Abdeckplatte 13 verlaufende Nut 27 auf, in die eine von der Abdeckplatte 13 nach hinten abstehende Nase 28 hineinragt. Die Unterflanke dieser Nut 27 ist als Schrägfläche ausgebildet, ebenso wie die Unterseite der keilförmigen Nase 28. Der die Nase 28 überragende obere Rand der Abdeckplatte 13 ragt in eine an der Unterseite der Oberwand 22 vorgesehene Nut 29 heinein, deren Vorderfläche eine quer zur Nutz 27 verlaufende Sperrfläche 30 bildet. Die Abdeckplatte 13 kann in den Gelenkeingriff 25 nicht durch paralleles Verschieben eingesetzt werden, sondern nur durch Schrägstellung und anschließende Drehung um die Anlage an der Sperrfläche 30 herum. Der Gelenkeingriff 25 ermöglicht ausschließlich eine solche Drehung in einem Winkelbereich von etwa 45°. Danach kann die schrägstehende Abdeckplatte 13 nach unten herausgezogen werden, wenn die Nase 28 außer Eingriff mit der Nut 27 gelangt ist.

Am vorderen Ende der Unterwand 23 befindet sich der Zentriereingriff 31. An der Unterwand 23 ist über eine nach oben gerichtete Abbiegung 32 ein parallel zur Unterwand verlaufender Schenkel 32 vorgesehen, der an seinem Ende eine nach vorne gerichtete Spitze 33 mit zwei Schrägflächen 33a und 33b bildet. Von der Abdeckplatte 13 steht ein Schenkel 34 nach hinten ab, der sich in ein generell tangential zum Gelenkeingriff 25 verlaufendes, nach hinten offenes Keilnest 35 in Form einer V-Nut 35 verzweigt. Die Innenflächen dieses Keilnests bilden schräge Zentrierflächen, die mit den Zentrierflächen 33a und 33b gleicher Schräge zusammenwirken, wenn die Abdeckplatte 13 um die Zentrierfläche 30 herum in ihre Schließstellung verschwenkt wird. Die Mittelachse des Keilnests 35 verläuft annähernd tangential zu dem Kreis, auf dem das dem Gelenkeingriff 25 abgewandte Ende der Abdeckplatte 13 sich bewegt, wenn die Abdeckplatte um den Gelenkeingriff 22 verschwenkt wird. Wenn bei dieser Schwenkbewegung die Oberwand 22 durch Gewichtsbelastung der Tragschiene 17 verformt ist, wird sie durch die zusammenwirkenden Zentrierflächen der Spitze 33 und des Keilnests 35 geradegebogen. Der Zentriereingriff 33 ermöglicht das Schließen der Abdeckplatte 33 ausschließlich durch horizontales Heranbewegen des unteren Endes der Abdeckplatte an die Trennwand 23, wie es beim Schwenken um den Gelenkeingriff 25 herum geschieht.

Das untere Kanalgehäuse 12 weist eine horizontale Oberwand 36, eine hierzu parallele Unterwand 23 und eine diese Wände verbindende Rückwand 98 auf. Die Oberwand 36 bildet zusammen mit der flächig an ihr anliegenden Unterwand 23 des oberen Kanalgehäuses 11 die Trennwand 79, die die beiden Kanäle 38 und 39 voneinander trennt. Die Oberwand 36 ist am vorderen Ende spiegelbildlich zur Unterwand 23 ausgebildet, d.h. sie weist einen nach vorne abstehenden, nach unten verschobenen Steg 40 auf, der eine nach vorne gerichtete Spitze 41 trägt. Die Spitze 41 bildet zusammen mit einer V-Nut 42 an einem von der Abdeckplatte 14 nach hinten abstehenden Schenkel 43 vorgesehen ist, einen Zentriereingriff 44, mit beim Schließen der Abdeckplatte 14 zusammenwirkenden Zentrierflächen.

Das untere Ende der Abdeckplatte 14 ist mit dem vorderen Ende der Unterwand 37 durch einen Gelenkeingriff 45 verbunden. Dieser weist eine parallel zur Ebene der Abdeckplatte 14 verlaufende Nut 46 in einem von der Unterwand 37 aufragenden Vorsprung 47 auf. In diese Nut 47 ragt eine von der Abdeckplatte 14 nach hinten abstehende und nach unten umgebogene Leiste 48 hinein. Die Nut 46 hat gegenüber der Breite der Nase 48 Übermaß, so daß die Nase 48 in der Nut in Grenzen geschwenkt werden kann. Oberhalb der Nut 46 befindet sich eine quer zur Nut verlaufende Schrägfläche als Sperrfläche 49, gegen die eine keilförmige Nase 50 der Abdeckplatte 14 stößt.

Der Gelenkeingriff 45 erlaubt das Einsetzen oder Entfernen der Abdeckplatte 14 ausschließlich bei schrägstehender Abdeckplatte, wobei die Nase 48 außer Eingriff mit der Nut 46 gebracht werden kann, jedoch nicht durch Parallelverschiebung. Wenn die Unterwand 37 wird durch Belastung der Tragschiene 18 verformt ist und die Abdeckplatte 14 vorgesetzt werden soll, wird die Abdeckplatte zunächst an ihrem unteren Ende mit der Nase 48 in die Nut 46 schräg eingesetzt, wodurch der Gelenkeingriff 45 hergestellt wird. Beim anschließenden Schwenken der Abdeckplatte 14 in die Schließstellung wird der Zentriereingriff 44 hergestellt und dabei wird die Abdeckplatte 14 in bezug auf die Querwand 37 in die korrekte Position gezogen, wodurch die Biegung der Unterwand 37 aufgehoben wird, da nunmehr das Kanalgehäuse 12 mit der vorgesetzten Abdeckplatte 14 ein geschlossenes Rechteckprofil bildet.

Die Nut 48 am unteren Ende des Kanalgehäuses 12 wird nach vorne durch eine Leiste 52 begrenzt, die von dem Rand 53 der Abdeckplatte 14 übergriffen wird. Auf diese Weise kann Feuchtigkeit, z.B. beim Abwischen der Abdeckplatten, selbst bei hoher Gewichtsbelastung der Gehäuseeinheit nicht in einen in das Gehäuseinnere hineinführenden Spalt eindringen. Feuchtigkeit oder Schmutz sammelt sich auf der unteren Tragschiene 18 und kann dort beseitigt werden.

Der Eingriff des oberen Randes der Abdeckplatte 13 in die Nut 29 bewirkt daß dort ebenfalls kein in das Innere des Gehäuses hineinführender Spalt entstehen kann.

Die Kanalgehäuse 11 und 12 sowie auch die Abdeckplatten 13 und 14 bestehen aus Strangprofilen, z.B. aus Aluminium, die über ihre gesamte Länge konstanten Querschnitt haben.

Die die Trennwand bildenden Wände, nämlich die Unterwand 23 und die Oberwand 36, stellen aneinanderliegende Stoßwände dar, die mit Verhakungselementen 55,56 in Eingriff stehen, welche eine gegenseitige Verschiebung verhindern. Weitere Verhakungselemente 57 und 58 befinden sich an den rückwärtigen Enden der Wände 23 und 36. Das Verhakungselement 58 der Oberwand 36 übergreift das Verhakungselement 57 der Unterwand 23. Diese Verhakungselemente 57,58 verhindern das gegenseitige Entfernen der Wände 23 und 36. Die Verhakungselemente 55,56 und 57,58 bilden einen Gelenkeingriff 59, der in einem begrenzten Drehwinkelbereich ausschließlich gegenseitige Verschwenkungen der beiden Kanalgehäuse 11 und 12 zuläßt.

Zur Verhinderung des Auseinanderspreizens der Wände 23 und 36 sind diese an ihren vorderen Enden mit einer Klammer 60 gesichert. Diese im wesentlichen U-förmige Klammer übergreift mit ihren Schenkeln zwei von den Wänden 23 und 36 nach vorne abstehende Beine 61 und erhält dadurch die Wände 23 und 36 gegeneinandergedrückt. Die Klammer 60, die in Fig. 3 in Seitenansicht dargestellt ist, besteht aus einem U-förmigen Blechteil von dessen Basis 62 zwei parallele Schenkel 63 abstehen. Das Ende jedes Schenkels 63 ist um etwas weniger als 180° zurück umgebogen und bildet eine über die Basis 62 überstehende Lasche 64, die hinter die keilförmige Spitze 33 bzw. 41 greift und sich dort verhakt. An den Schenkeln 63 sind nach innen gerichtete Krallen 65 vorgesehen, die gegen die Beine 61 der Wände 23 und 36 drücken und die Klammer 60 an diesen Beinen 61 festkrallen. In der Basis 62 der Klammer 60 befindet sich eine Gewindemuffe 66, in die eine Schraube 67 eingreift.

Die Schraube 67 verläuft durch ein Loch in einem an der Abdeckplatte 13 vorgesehenen zurückliegenden Steg 68 hindurch, der von dem Steg 34 absteht. Der Steg 68 überlappt von vorne einen zurückliegenden Steg 69 der Abdeckplatte 14. Die Schraube 67 verriegelt somit die beiden Abdeckplatten 13 und 14 im Schließzustand an der Klammer 60, die ihrerseits an den Wänden 23, 36 bzw. den zugehörigen Beinen 61 dieser Wände verkrallt ist. Mit einer einzigen Schraube 67 werden beide Abdeckplatten 13 und 14 im Schließzustand gehalten, wobei für das Festhalten und Andrücken beider Abdeckplatten in die Zentriereingriffe 31 und 44 nur eine einzige Schraube 67 erforderlich ist.

Klammern 60 und Schrauben 67 sind über die Länge der Gehäuseeinheit nur an einigen Stellen vorgesehen.

Im Bereich der Stege 34 und 43 sind einanderzugewandte bogenförmige Rinnen 70,71 ausgebildet, die mit gegenseitigen Abstand angeordnet sind, um Zugang zu dem Kopf der Schraube 67 zu ermöglichen. In den von den Rinnen 70 und 71 begrenzten Spalt ist der Dichtungsschlauch 19 eingesetzt, der aus Elastomermaterial, z.B. Silikon, besteht und den Spalt abdichtend ausfüllt. Erforderlichenfalls kann dieser Dichtungsschlauch 19 leicht aus dem Spalt herausgezogen, gereinigt und wieder eingedrückt werden.

Die aus den beiden Kanalgehäusen 11 und 12 bestehende Gehäuseeinheit kann fabrikmäßig vormontiert und anschließend im Gebäude installiert werden. Für diese Installation ist ein Wandhalter 80 vorgesehen, der ebenfalls aus einem Strangprofil besteht und der an der Gebäudewand befestigt werden kann. Der Wandhalter 80 erstreckt sich über die gesamte Höhe beider Kanalgehäuse. Er ist an seinem oberen Ende als schräg nach vorne weisende Nase 81 ausgebildet, die in eine von der Oberwand 22 nach unten weisende Nut 82 eindringt. Ein nach hinten gerichteter Vorsprung 83 überragt die Nut 82 in rückwärtiger Richtung und trägt dort eine gegen die Gebäudewand gerichtete Dichtung 84. Die Gehäuseeinheit 10 wird gewissermaßen in die Nase 81 eingehängt und anschließend mit ihrem unteren Ende an den Wandhalter angeschwenkt. Der Wandhalter 80 weist hier einen nach vorne gerichteten Tragsteg 85 auf, auf dem eine horizontale Stützwand 86 zur Auflage kommt. In eine Gewindebohrung der Unterwand 37 ist eine Spannschraube 87 eingeschraubt, die von untenher gegen die Stützwand 85 stößt und dabei gegen eine schräg nach unten und vorne gerichtete Nase 88 der Stützwand 85 drückt. Am rückwärtigen Ende der Unterwand 37 befindet sich ein Vorsprung 89 mit einer gegen die Gebäudewand gerichteten Dichtung 90.

Bei dem beschriebenen Ausführungsbeispiel sind die Kanäle 38 und 39 in separaten Kanalgehäusen 11 und 12 enthalten. Es besteht auch die Möglichkeit, die Gehäuseeinheit 10 einstückig zu machen und dabei nur eine einwandige Trennwand 79 vorzusehen. In jedem Fall werden jedoch die Kanäle 38 und 39 durch separate Abdeckplatten 13 und 14 verschlossen.

## Patentansprüche

1. Versorgungseinheit mit
einer langgestreckten horizontalen Gehäuseeinheit (10), die durch eine Trennwand (79) in zwei Kanäle (38,39) unterteilt ist,
Abdeckplatten (13,14) zum Verschließen der Kanäle (38,39) wobei die Abdeckplatten mit der Ober- bzw. Unterwand (22;37) und der Trennwand (79) der Gehäuseeinheit (10) durch Führungselemente zusammengreifen,
wobei die Führungselemente an jeweils einem Rand der Abdeckplatte (13,14) einen Gelenkeingriff (25;45) und am gegenüberliegenden Rand einen weiteren Eingriff bilden,
**dadurch gekennzeichnet,**
daß die Oberwand (22) und/oder die Unterwand (37) mindestens eine Tragschiene (17,18) zum Aufhängen externer Lasten aufweist, und daß der weitere Eingriff ein Zentriereingriff (31;44) ist, dessen schräge Zentrierflächen ein etwa tangential zum Gelenkeingriff (25;45) verlaufendes Keilnest (35) bilden, um beim Schließen der Abdeckplatte (13,14) die Abdeckplatte in der Plattenebene in die korrekte Position zu ziehen.

2. Versorgungseinheit nach Anspruch 1, dadurch gekennzeichnet, daß die Zentriereingriffe (31;44) der beiden Abdeckplatten (13,14) mit der Trennwand (79) erfolgen.

3. Versorgungseinheit nach Anspruch 2, dadurch gekennzeichent, daß an der Trennwand (79) zwei Schenkel (32,40) vorgesehen sind, von denen jeder mit einem von einer anderen Abdeckplatte (13,14) abstehenden Schenkel (34,43) einen Zentriereingriff (31,44) bildet.

4. Versorgungseinheit nach einem der Ansprüche 1 bis 3, dadurch gekennzeichnet, daß jeder Zentriereingriff (31,44) eine Spitze (33,41) mit zwei schrägen Zentrierflächen (33a,33b) und eine V-Nut mit ebenfalls zwei schrägen Zentrierflächen aufweist.

5. Versorgungseinheit nach einem der Ansprüche 1 bis 4, dadurch gekennzeichnet, daß jeder Gelenkeingriff (25,45) eine Nut (27,48) und eine darin eingeführte Leiste (28,48) sowie eine quer zu der Nut verlaufende Sperrfläche (30,49) aufweist, die das Herausziehen der Leiste (28,48) aus der Nut verhindert.

6. Versorgungseinheit, nach einem der Ansprüche 1 bis 5, dadurch gekennzeichnet, daß jeder Kanal (38,39) ein eigenes Kanalgehäuse (11,12) aufweist und die aneinanderliegenden Stoßwände (23,36) der Kanalgehäuse gemeinsam die Querwand (79) bilden, und daß diese Stoßwände (23,36) zusammengreifende Verhakungselemente (55,56;57,58) aufweisen und durch eine Klammer (60) gegen Auseinanderspreizen gesichert sind.

7. Versorgungseinheit nach Anspruch 6, dadurch gekennzeichnet, daß die Klammer (60) die Frontseiten der Stoßwände (23,36) überbrückt und eine Halterung für eine Schraube (67) bildet, die durch einen zurückliegenden Steg (68) mindestens einer Abdeckplatte (13) hindurchgeht.

8. Versorgungseinheit nach einem der Ansprüche 1 bis 7, dadurch gekennzeichnet, daβ zwei zurückliegende Stege (68,69) der benachbarten Abdeckplatten (13,14) einander vor der Trennwand (79) überlappen und daβ eine mit der Trennwand (79) verbindbare Schraube (67) nur durch den vorderen Steg (68) hindurchgeht und dieser den hinteren Steg (69) niederhält.

9. Versorgungseinheit nach einem der Ansprüche 1 bis 8, dadurch gekennzeichnet, daβ die benachbarten Ränder der Abdeckplatten (13,14) einander zugewandte Rinnen (70,71) aufweisen, die gemeinsam ein Bett zur Aufnahme eines Dichtungsschlauchs (19) bilden.

10. Versorgungseinheit nach einem der Ansprüche 1 bis 9, dadurch gekennzeichnet, daβ die obere Abdeckplatte (13) von untenher in eine vertikale Nut (29) der Oberwand (22) hineinragt.

11. Versorgungseinheit nach einem der Ansprüche 1 bis 10, dadurch gekennzeichnet, daβ die untere Abdeckplatte (14) vor einer von der Bodenwand (12) aufragenden Leiste (52), diese nur teilweise überlappend, endet.

## Claims

1. A supply unit, comprising
an elongate horizontal housing unit (10) divided into two channels (38,39) by a partition wall (79),
covering plates (13,14) for closing the channels (38,39), the covering plates engaging with the upper and lower walls (22;37), respectively, and the partition wall (79) of the housing unit (10) by means of guiding elements,
the guiding elements forming, on one edge of the covering plate (13,14), respectively, an articulated engagement (25;45), and, on the opposite edge, a further engagement,
**characterized in**
that the upper wall (22) and/or the lower wall (37) comprise at least one carrying rail (17,18) for suspending external loads, and that the further engagement is a centering engagement (31;44), whose oblique centering surfaces form a wedge nest extending about tangentially to the articulated engagement (25;45) in order to draw the covering plate into the correct position in the plate plane when closing the covering plate (13,14).

2. The supply unit according to claim 1, characterized in that the centering engagements (31;44) of the two covering plates (13,14) are made with the partition wall (79).

3. The supply unit according to claim 2, characterized in that two legs (32,40) are provided on the partition wall (79) each of which forms a centering engagement (31,44) with a leg (34,43) projecting from another covering plate (13,14).

4. The supply unit according to one of claims 1 to 3, characterized in that each centering engagement (31,44) comprises a tip (33,41) having two oblique centering surfaces (33a,33b) and a V-groove also having two oblique centering surfaces.

5. The supply unit according to one of claims 1 to 4, characterized in that each articulated engagement (25,45) comprises a groove (27,48) and a strip (28,48) introduced therein and a blocking surface (30,49) extending transversely to the groove and preventing withdrawal of the strip (28,48) from the groove.

6. The supply unit according to one of claims 1 to 5, characterized in that each channel (38,39) comprises its own channel housing (11,12), and the abutting butt walls (23,36) of the channel housings together form the lateral wall (79), and that these butt walls (23,36) comprise interengaging hook elements (55,56;57,58) and are secured by a clamp (60) against spreading apart.

7. The supply unit according to claim 6, characterized in that the clamp (60) bridges the front sides of the butt walls (23,36) and forms a mounting for a screw (67) passing through a backing web (68) of at least one covering plate (13).

8. The supply unit according to one of claims 1 to 7, characterized in that two backing webs (68,69) of the neighboring covering plates (13,14) overlap each other in front of the partition wall (79), and that a screw (67) connectable with the partition wall (79) only passes through the front web (68) and the latter holds down the rear web (69).

9. The supply unit according to one of claims 1 to 8, characterized in that the neighboring edges of the covering plates (13,14) comprise ducts (70,71) facing each other and forming a bed together for receiving a sealing hose (19).

10. The supply unit according to one of claims 1 to 9, characterized in that the upper covering plate (13) projects into a vertical groove (29) of the upper wall (22) from below.

11. The supply unit according to one of claims 1 to 10, characterized in that the lower covering plate (14) terminates in front of a strip (52) projecting from the bottom wall and being only partially overlapped by the covering plate.

## Revendications

1. Unité d'alimentation, avec
un ensemble de boîtier horizontal allongé (10) qui est subdivisé, par une cloison (79), en deux canaux (38, 39)**,**
des plaques de recouvrement (13, 14) destinées à obturer les canaux (38, 39), les plaques de recouvrement venant en prise, par l'intermédiaire d'éléments de guidage, avec la paroi supérieure ou inférieure (22; 37) et la cloison (79) de l'ensemble de boîtier (10),
les éléments de guidage formant, à l'un des bords de la plaque de recouvrement (13, 14), un encastrement articulé (25; 45) et, au bord opposé, un autre encastrement, caractérisée par le fait que la paroi supérieure (22) et/ou la paroi inférieure (37) présentent au moins un rail porteur (17, 18) destiné à l'accrochage de charges extérieures et que l'autre encastrement est un encastrement de centrage (31; 44) dont les faces de centrages obliques forment un nid à clavette (35) s'étendant environ tangentiellement à l'encastrement articulé (25; 45), afin d'amener la plaque de recouvrement, lors de la fermeture de la plaque de recouvrement (13, 14), dans la position correcte dans le plan des plaques.

2. Unité d'alimentation selon la revendication 1, caractérisée par le fait que les encastrements de centrage (31; 44) des deux plaques de recouvrement (13, 14) s'effectuent avec la cloison (79).

3. Unité d'alimentation selon la revendication 2, caractérisée par le fait que sur la cloison (79) sont prévues deux branches (32, 40) dont chacune forme, avec une branche (34, 43) s'écartant d'une autre plaque de recouvrement (13, 14), un encastrement de centrage (31; 44).

4. Unité d'alimentation selon l'une des revendications 1 à 3, caractérisée par le fait que chaque encastrement de centrage (31, 44) présente une pointe (33, 41) à deux faces de centrage obliques (33a, 33b) et une gorge en V, également à deux faces de centrage obliques.

5. Unité d'alimentation selon l'une des revendications 1 à 4, caractérisée par le fait que chaque encastrement articulé (25, 45) présente une gorge (27, 46) et une languette (28, 48) y guidée, ainsi qu'une face d'arrêt (30, 49), s'étendant transversalement à la gorge, qui empêche l'extraction de la languette (28, 48) de la gorge.

6. Unité d'alimentation selon l'une des revendications 1 à 5, caractérisée par le fait que chaque canal (38, 39) présente un boîtier de canal (11, 12) propre et que les parois d'about (23, 36) adjacentes des boîtiers de canal (11, 12) constituent, ensemble, la paroi transversale (79) et que ces parois d'about (23, 36) présentent des éléments d'accrochage (55, 56; 57, 58) venant en prise les uns avec les autres et sont empêchées, par l'intermédiaire d'un crampon (60), de s'écarter l'une de l'autre.

7. Unité d'alimentation selon la revendication 6, caractérisée par le fait que le crampon (60) enjambe les côtés frontaux des parois d'about (23, 36) et constitue un support pour une vis (67) qui traverse une entretroise (68) en retrait d'au moins l'une (13) des plaques de recouvrement.

8. Unité d'alimentation selon l'une des revendications 1 à 7, caractérisée par le fait que deux entretoises (68, 69) en retrait des plaques de recouvrement (13, 14) voisines se recouvrent devant la cloison (79) et qu'une vis (67) pouvant être assemblée avec la cloison (79) ne traverse que l'entretoise avant (68) et que cette dernière maintient l'entretoise arrière (69) abaissée.

9. Unité d'alimentation selon l'une des revendications 1 à 8, caractérisée par le fait que les bords voisins des plaques de recouvrement (13, 14) présentent des rainures (70, 71) orientées l'une vers l'autre qui, ensemble, forment un lit destiné à recevoir un flexible d'étanchéité (19).

10. Unité d'alimentation selon l'une des revendications 1 à 9, caractérisée par le fait que la plaque de recouvrement supérieure (13) pénètre, depuis le bas, dans une gorge verticale (29) de la paroi supérieure (22).

11. Unité d'alimentation selon l'une des revendications 1 à 10, caractérisée par le fait que la plaque de recouvrement inférieure (14) se termine devant une languette (52), s'élevant depuis la paroi inférieure (12), en ne recouvrant la languette que partiellement.
